# EUROPEAN PATENT APPLICATION

(11) **EP 2 873 553 A1**
(43) Date of publication of application: **20.05.2015**
(21) Application number: 14193273.1
(22) Date of filing: 14.11.2014
(51) Int. Cl.: B60N 2/56, B60N 2/22

(54) **Vehicle seat ventilation system**

(30) Priority: 19.11.2013 US 201314084198
(71) Applicant: Atieva, Inc., Redwood, City CA 94065 (US)
(72) Inventor: Rawlinson, Peter Dore, Evesham, Worcestershire WR11 8SL (GB)
(74) Representative: Prüfer & Partner GbR European Patent Attorneys

(57) **Abstract**

An air vent (501) that is integrated into a back panel of a vehicle's seat back (507) is provided. The air vent, which is coupled to an air duct (505) within the vehicle seat (503), allows heated or cooled air from the vehicle's heating, ventilation, and air conditioning (HVAC) system to be directed towards the rear portion of the vehicle's passenger cabin, thereby helping to insure the comfort of those passengers in the vehicle's rear seats.

## Description

### FIELD OF THE INVENTION

The present invention relates generally to vehicle ventilation systems and, more particularly, to a system that provides ventilation to the rear portion of a vehicle's passenger cabin.

### BACKGROUND OF THE INVENTION

The air outlets in a conventional vehicle are typically located in, or about, the front dash and include multiple air control vanes. The air control vanes are adjustable, thus allowing the driver or the front seat passenger to direct air flow from each of the air outlets throughout the passenger cabin. To send heated or cooled air from the car's heating and cooling system, i.e., the HVAC system, to the rear portion of the passenger cabin, typically air flow is directed from one or more centrally located air vents in the dash, between the driver and the front seat passenger, and back towards the rear passengers. Unfortunately, due to the distance between the air vents in the dash and the rear passengers, as well as the location of those air vents, rear passengers are often under-heated, or under-cooled, relative to the driver and the front passenger.

To overcome the limitations of front dash mounted air vents, many luxury and sport utility vehicles (SUVs) include at least some air vents in the rear passenger cabin. Large sedans, vans and SUVs will often route air ducts between the vehicle's roof and the headliner, thus allowing multiple air vents to be located in the headliner adjacent to the passengers in the second and/or third row seats. Alternately, air vents may be located on the rear panel of a center console compartment located between the front seats. While locating air vents in the center console or the headliner help to cool and/or heat the rear-seated passengers, these vents provide an inadequate solution due to their location, i.e., either directing air flow near the top of the passengers' heads or near their feet. Accordingly, what is needed is a convenient and easily accessible air vent for use by the rear passengers in a vehicle. The present invention provides such an air vent.

### SUMMARY OF THE INVENTION

The present invention provides an air vent that is integrated into the back panel of a vehicle seat back. The air vent is coupled to an air duct within the vehicle seat such that air flowing from a heating, ventilation, and air conditioning (HVAC) system passes through the air duct and then through the air vent, thereby directing heated or cooled air from the HVAC system towards the rear portion of the vehicle's passenger cabin.

In one aspect, the air duct may include a flexible duct member that is configured to allow the seat back to recline relative to the lower seat cushion without interrupting air flow between the HVAC system and the air vent. The flexible duct member may be comprised of a first fitting coupled to a first portion of the air duct and the air vent, and a second fitting coupled to a second portion of the air duct and the HVAC system, where the first fitting is configured to rotate about the second fitting without interrupting air flow between the HVAC system and the air vent.

In another aspect, the air duct may include a duct extension member that allows the vehicle seat to move forward and backward relative to the vehicle's floor without interrupting air flow between the HVAC system and the air vent. The duct extension member may be comprised of a flexible duct member; alternately, the duct extension member may be comprised of a slidable coupling. The slidable coupling may be comprised of an inner fitting coupled to a first portion of the air duct and an outer fitting coupled to a second portion of the air duct, where the inner fitting is configured to slide within the outer fitting without interrupting air flow between the HVAC system and the air vent.

In another aspect, the ventilation system may include a fan interposed between the HVAC system and the air vent, the fan varying air flow from the HVAC system through the air duct and the air vent. The fan may be incorporated into the vehicle seat back or into a lower seat cushion of the vehicle seat. A fan speed control switch may be integrated into the back panel of the vehicle seat back, the fan speed control switch controlling the speed of the fan.

In another aspect, the air vent may include a plurality of pivotable air vanes, where orientation of the pivotable air vanes determines the air flow path for the air flowing from the HVAC system and through the air vent. The plurality of pivotable air vanes may be comprised of a plurality of horizontal air vanes that determine the up/down air flow direction and a plurality of vertical air vanes that determine the left/right air flow direction. A control tab, for example of either a planar, elongated form or a knob-like form, may be mechanically coupled to the plurality of pivotable air vanes and used to adjust the orientation of the air vanes.

In another aspect, an air flow intensity control switch, for example coupled to an air flow shut-off door, may be integrated into the back panel of the vehicle seat back.

A further understanding of the nature and advantages of the present invention may be realized by reference to the remaining portions of the specification and the drawings.

### BRIEF DESCRIPTION OF THE DRAWINGS

Fig. 1 provides a perspective view of the back panels of the front seats of a vehicle utilizing the ventilation system of the present invention;
Fig. 2 provides a side view of a portion of a vehicle's passenger cabin, this view illustrating possible air flow directions from the seat back air vents of the invention;
Fig. 3 provides a top view of a portion of a vehicle's passenger cabin, this view illustrating possible air flow directions from the seat back air vents of the invention;
Fig. 4 provides a cross-sectional view of a vehicle seat incorporating an air duct and outlet in accordance with the invention;
Fig. 5 provides a cross-sectional view of a vehicle seat incorporating an air duct and outlet in accordance with an alternate embodiment of the invention;
Fig. 6 provides the same view as that shown in Fig. 4, with the inclusion of a HVAC fan interposed between the HVAC system and the seat back air outlet;
Fig. 7 provides the same view as that shown in Fig. 4, with the inclusion of a HVAC fan integrated into the seat back;
Fig. 8 provides a front view of a seat back air outlet in accordance with the invention; and
Fig. 9 provides a front view of a seat back air outlet in accordance with an alternate embodiment of the invention.

### DESCRIPTION OF THE SPECIFIC EMBODIMENTS

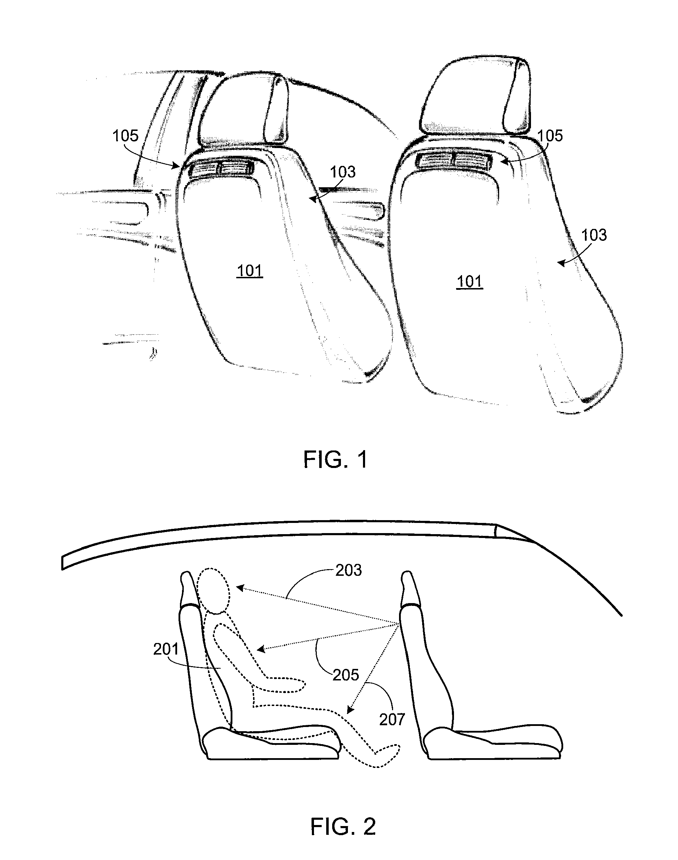

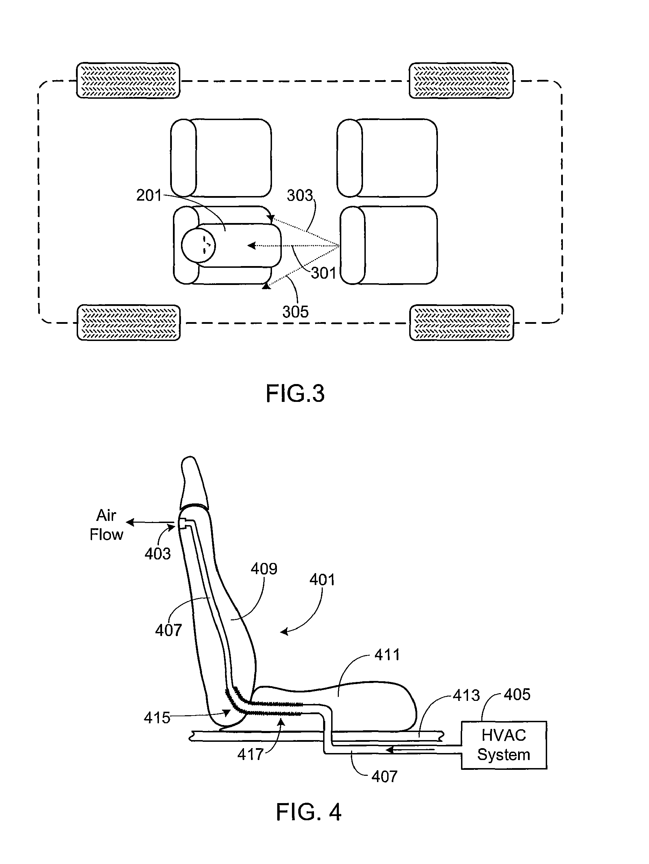

Fig. 1 provides a perspective view of the back panels 101 of the front seats 103 of a vehicle utilizing the ventilation system of the present invention. Integrated into the back panel 101 of each seat is an air outlet 105, each air outlet being coupled to the vehicle's heating, ventilation, and air conditioning (HVAC) system as shown in Figs. 4-7. By placing the air vents 105 into the back portions of the front seats 103, the occupants of the rear seats are closer to the flow of HVAC air, thus helping to maintain the rear cabin temperature within the desired temperature range. Additionally and as illustrated in Fig. 2, this vent location allows a rear seat occupant 201 to direct air flow where desired, for example towards the face in a direction 203, towards the torso in a direction 205, or towards the legs and feet in a direction 207. Assuming the use of left/right directional vanes within each air outlet 105 as preferred, the user is also able to use air outlets 105 to direct air flow directly at themselves, i.e., in a direction 301 as shown in Fig. 3, or to one side or the other, i.e., towards the center of the rear passenger cabin along a direction 303 or towards the side of the rear passenger cabin in a direction 305. Lastly, it will be appreciated that by placing the air outlets 105 in the back panels of the front seats, the outlets are within easy reach of the rear seat occupants, thus simplifying air flow direction and intensity adjustments.

Fig. 4 provides a cross-sectional view of a preferred embodiment of a front seat 401 into which an air outlet 403 is integrated. Air outlet 403 is coupled to the vehicle's HVAC system 405 by a system of ducts 407. It should be understood that the present invention is not limited to a specific duct configuration and that the configurations illustrated in Figs. 4-7 are exemplary in nature. Preferably ducts 407 run through seat back 409, lower seat cushion 411, and then under the vehicle's flooring 413. In the illustrated and preferred embodiment, duct system 407 is configured to allow seat back 409 to recline, and to allow seat 401 to move frontwards and backwards. To provide this range of motion, the illustrated embodiment includes a flexible elbow 415 and an expandable duct 417. In at least one embodiment, flexible elbow 415 and expandable duct 417 utilize a single section of flexible hose.

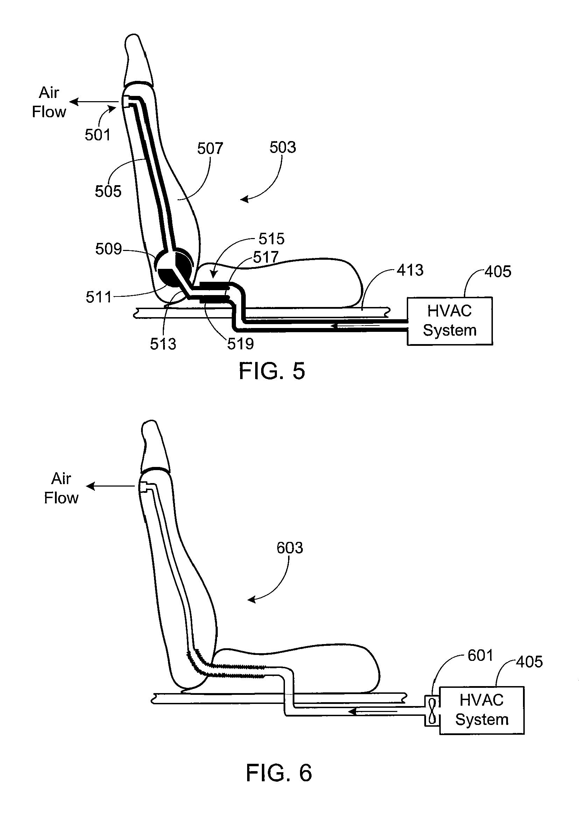

Fig. 5 provides a cross-sectional view of an alternate duct system that integrates air outlet 501 into seat 503. In this embodiment air outlet 501 is coupled to a duct 505 which is incorporated into seat back 507. At the lower end of duct 505 is a fitting 509. A mating fitting 511 is attached at an end of a second duct 513. Fitting 509 is configured to rotate about fitting 511 while maintaining fluid communication between upper duct 505 and lower duct 513, thereby allowing seat back 507 to recline without interrupting air flow through air outlet 501. Although a flexible duct could be used to allow seat 503 to move forwards/backwards, in the illustrated embodiment duct 513 includes a slidable coupling 515. Preferably air seals are used to minimize air leakage between fittings 509 and 511, as well as between inner coupling 517 and outer coupling 519 of slidable coupling 515. The seals may be, for example, compression seals or comprised of a flap-type seal.

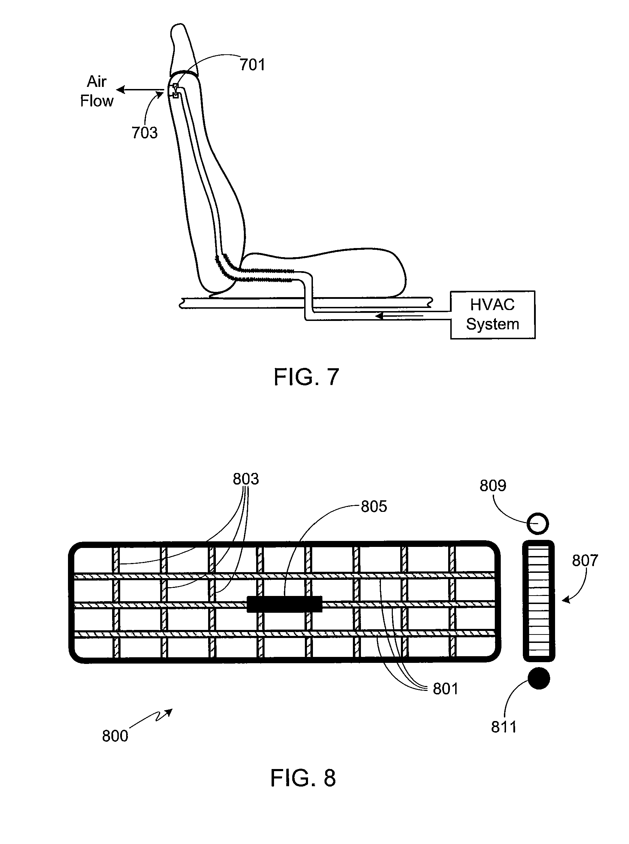

To ensure sufficient air flow through the back seat air outlet, preferably a fan is integrated into the duct system that is used to couple HVAC system 405 to the air outlet. Figs. 6 and 7 illustrate two possible locations for such a fan based on the duct configuration shown in Fig. 4. It should be understood, however, that a fan may be used with other duct configurations, such as the configuration illustrated in Fig. 5, and that the two fan locations shown in Figs. 6 and 7 are only meant to illustrate such an arrangement. In Fig. 6 a fan 601 is located near the HVAC system 405, and before the duct system running through seat 603. In Fig. 7 a fan 701 is located near air outlet 703.

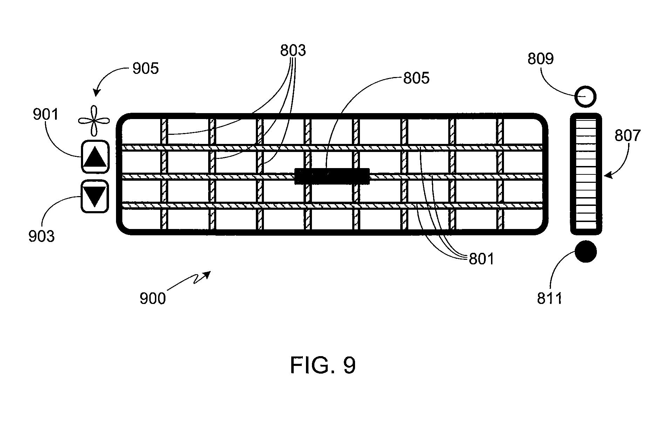

Figs. 8 and 9 provide front views of two exemplary air outlets 800 and 900, respectively. It will be understood that the invention may use different outlet configurations, including the use of different outlet sizes, different directional vane configurations, different vane controllers, different air flow intensity controllers, etc. Visible within each outlet are two sets of air direction vanes 801 and 803. Preferably vanes 801 and 803 are orthogonal to one another, or substantially orthogonal to one another, thus allowing the user to control up-down air flow using the horizontal vanes 801 as illustrated in Fig. 2, and left-right air flow using the vertical vanes 803 as illustrated in Fig. 3.

In the illustrated outlets, a control tab 805 extends away from the assembly. Control tab 805, which may utilize an elongated planar tab as shown or a cylindrical knob or other shape, provides the user with means for adjusting either horizontal vanes 801 or vertical vanes 803.

Although not required, preferably adjacent to the air vent (e.g., air vent 800 or 900) is a switch 807 that provides a means for adjusting the intensity of the air flow passing through the air vent. Typically switch 807 rotates and controls air flow by controlling the position of a shut-off door mounted within the air vent. Symbols 809 and 811 indicate a fully open vent and a fully closed vent, respectively, and help the user to understand how to control air flow through the vent.

The air vent shown in Fig. 9 is the same as that shown in Fig. 8, with the addition of a fan controller. Pressing, or otherwise activating, switch 901 increases fan speed, thereby increasing air flow through vent 900. Similarly pressing, or otherwise activating, switch 903 decreases fan speed, thereby decreasing air flow through vent 900. Symbol 905 simply indicates to the user the purpose of switches 901 and 903.

It should be understood that the accompanying figures are only meant to illustrate, not limit, the scope of the invention and should not be considered to be to scale.

Systems and methods have been described in general terms as an aid to understanding details of the invention. In some instances, well-known structures, materials, and/or operations have not been specifically shown or described in detail to avoid obscuring aspects of the invention. In other instances, specific details have been given in order to provide a thorough understanding of the invention. One skilled in the relevant art will recognize that the invention may be embodied in other specific forms, for example to adapt to a particular system or apparatus or situation or material or component, without departing from the spirit or essential characteristics thereof. Therefore the disclosures and descriptions herein are intended to be illustrative, but not limiting, of the scope of the invention.

## Claims

1. A vehicle seat adapted for use with a vehicle heating, ventilation, and air conditioning (HVAC) system, comprising:
an air duct, wherein at least a section of said air duct is integrated within a seat back of said vehicle seat, said air duct coupled to said HVAC system; and
an air vent integrated into a back panel of said seat back of said vehicle seat, said air vent coupled to said air duct, wherein air flowing from said HVAC system and through said air duct passes through said air vent and is directed by said air vent away from said seat back in a direction behind said vehicle seat towards an area of a vehicle passenger cabin located behind said vehicle seat.

2. The vehicle seat of claim 1, said air duct further comprising a flexible duct member configured to allow said seat back to recline relative to a lower seat cushion of said vehicle seat without interrupting air flow between said HVAC system and said air vent.

3. The vehicle seat of claim 2, wherein said flexible duct member is comprised of a first fitting coupled to a first portion of said air duct and a second fitting coupled to a second portion of said air duct, wherein said first portion of said air duct is coupled to said air vent and said second portion of said air duct is coupled to said HVAC system, and wherein said first fitting is configured to rotate about said second fitting without interrupting air flow between said HVAC system and said air vent.

4. The vehicle seat of anyone of claims 1 to 3, said air duct further comprising a duct extension member configured to allow said vehicle seat to move forward and backward relative to a vehicle floor without interrupting air flow between said HVAC system and said air vent.

5. The vehicle seat of claim 4, wherein said duct extension member is comprised of at least one of (i) a flexible duct member and (ii) a slidable coupling.

6. The vehicle seat of claim 5, wherein said slidable coupling is comprised of an inner fitting coupled to a first portion of said air duct and an outer fitting coupled to a second portion of said air duct, wherein said inner fitting is configured to slide within said outer fitting without interrupting air flow between said HVAC system and said air vent.

7. The vehicle seat of anyone of claims 1 to 6, further comprising a fan interposed between said HVAC system and said air vent, wherein said fan varies air flow from said HVAC system through said air duct and through said air vent.

8. The vehicle seat of claim 7, wherein said fan is incorporated into said section of said air duct integrated within said seat back of said vehicle seat.

9. The vehicle seat of claim 7, wherein said fan is incorporated into a second section of said air duct integrated within a lower seat cushion of said vehicle seat.

10. The vehicle seat of anyone of claims 7 to 9, further comprising a fan speed control switch electrically connected to said fan, wherein said fan speed control switch is integrated into said back panel of said seat back of said vehicle seat, and wherein said fan speed control switch controls a fan speed corresponding to said fan.

11. The vehicle seat of anyone of claims 1 to 10, further comprising:
a plurality of pivotable air vanes mounted within said air vent, wherein an orientation of said plurality of pivotable air vanes determines an air flow path of said air flowing from said HVAC system and through said air vent; and
a control tab mechanically coupled to said plurality of pivotable air vanes, wherein adjustment of said control tab alters said orientation of said plurality of pivotable air vanes.

12. The vehicle seat of anyone of claims 1 to 11, further comprising an air flow intensity control switch integrated into said back panel of said seat back of said vehicle seat, wherein said air flow intensity control switch is coupled to an air flow shut-off door.
